# EUROPEAN PATENT APPLICATION

(11) **EP 4 365 823 A1**
(43) Date of publication of application: **08.05.2024**
(21) Application number: 22204846.4
(22) Date of filing: 01.11.2022
(51) Int. Cl.: G06T 5/00

(54) **GENERATING A TRAINING DATASET FOR TRAINING A MACHINE-LEARNING ALGORITHM**

(71) Applicant: Koninklijke Philips N.V., 5656 AG Eindhoven (NL)
(72) Inventor: KOOIJMAN, Gerben, Eindhoven (NL); GERHARDT, Lutz Christian, Eindhoven (NL); JOHNSON, Mark Thomas, Eindhoven (NL)
(74) Representative: Philips Intellectual Property & Standards

(57) **Abstract**

A mechanism for modifying a training dataset that can be used to train a machine-learning algorithm. The trained machine-learning algorithm is for performing a desired task on an input image generated by a camera of a personal care device. Training input images, of a training dataset for the machine-learning algorithm, are modified responsive to one or more values of one or more device characteristics of the personal care device.

## Description

### FIELD OF THE INVENTION

The present invention relates to the field of machine-learning algorithms, and particularly those used to process images produced by a personal care device.

### BACKGROUND OF THE INVENTION

There is increasing tendency or trend to integrate cameras (i.e., or imaging sensors) into personal care devices. Images produced by such cameras can be processed, e.g., using a machine-learning algorithm, to produce desired output data. The desired output data may, for instance, be usable for remote image based diagnostics, location sensing, therapy planning or treatment monitoring.

Thus, it is fairly common for an image or images produced by a camera of a personal care device to be processed, by a machine-learning algorithm, to perform a desired task on the image(s).

Examples of personal care devices are well known to the skilled person, and can include any device usable for improving hygiene of an individual, modifying the appearance of the individual and/or for aiding in the performance of bodily functions of the individual. Suitable examples include: toothbrushes, mouthpieces, shavers, hair trimmers, epilators, oral irrigators, intense pulsed light (IPL) treatment devices for hair removal, breast pumps and so on.

### SUMMARY OF THE INVENTION

The invention is defined by the claims.

According to examples in accordance with an aspect of the invention, there is provided a computer-implemented method for modifying a training dataset usable for training a machine-learning algorithm to perform a desired task on an input image produced by a camera of a personal care device.

The computer-implemented method comprises: obtaining, for each of one or more device characteristics of the personal care device, a value of the device characteristic; obtaining the training dataset for the machine-learning algorithm, the training dataset comprising a plurality of training data entries, each training data entry comprising a training input image and training output data representing the data produced by performing the desired task on the training input image; and modifying each training input image using the value of each device characteristic to produce the modified training dataset.

The aim of the present disclosure is to enable robust analysis or processing (e.g., classification or noise reduction) of images obtained with a camera integrated in a personal care device.

It has been recognized that conventional training input images (of a training data) used in training a machine-learning algorithm to perform a desired task are usually obtained in a different (clinical) setting to that in practice. For instance, such training input images may be produced using professional standard cameras or imaging equipment. As such, the images on which the machine-learning algorithm is trained will not be fully representative of the images obtained with the camera of the personal care device.

For example, inherent motions of the personal care device (e.g., a vibration, rotation, or translation) will result in blurred / distorted images. Similarly, characteristics of the camera will also affect the quality of the images (e.g., due to resolution problems), which are particularly enhanced if there is also a motion. This blurring/distortion can significantly affect the performance of the machine-learning algorithm.

In order to overcome this issue, it is herein proposed to augment/modify the training input images, using device characteristics specific to the personal care device parameters, i.e., before performing training of the machine-learning algorithm. This approach means that the training input images are processed such that the specific blurring / distortion effects (of the particular personal care device) are artificially incorporated, before they are fed to the algorithm training. In this way, it is possible for a (modified) machine-learning algorithm to be trained for each individual personal care device or for a certain type/model of a personal care device.

This improves the accuracy of the subsequently trained machine-learning algorithm, by making it more specific to the particular personal care device.

The value of at least one device characteristic may be generated by one or more sensors of the personal care device.

In some examples, at least one of the one or more device characteristics is responsive to or indicative of a motion of the personal care device during use. It has been recognized that a motion of the personal care device will result in blurring/distortion in the images produced by a camera of the personal care device. This blurring/distortion can be simulated in the training input images to improve the training dataset used for training the machine-learning algorithm.

The one or more device characteristics may comprise one or more of the following: a vibration frequency of the personal care device and/or a vibrating element of the personal care device during use; a vibration amplitude of the personal care device and/or a vibrating element of the personal care device during use; a vibration waveform or pattern of the personal care device and/or a vibrating element of the personal care device during use (e.g. in-plane sweeping, reciprocating oscillation, out-of-plane tapping); a rotation frequency of a rotating element of the personal care device during use; and/or a rotation waveform or pattern of a rotating element (e.g. rotation-oscillation) of the personal care device during use.

In some examples, the at least one of the one or more device characteristics is a characteristic of the camera of the personal care device. It is recognized that the properties of the camera of the personal care device is likely to be different from those of the camera that captured the training input images. The training input images can thereby be modified such that they more closely resemble equivalent images had they been captured by the camera of the personal care device, thereby improving the relevance of the training dataset to processing such images.

The one or more device characteristics may comprise one or more of the following: a frame rate of the camera; an indicator of whether or not the camera uses a global shutter technique; an indicator of whether or not the camera uses a rolling shutter technique; if the camera uses a rolling shutter technique, a line collection time and/or a time-delay between exposure of neighboring image lines; if the camera uses a global shutter technique, a duty cycle of image acquisition; and/or one or more illumination parameters of the camera.

The method may further comprise a step of obtaining, for each of one or more user characteristics of a user of the personal care device, a value of the user characteristic. The step of modifying each training input image may similarly comprise modifying each training input image using the value of each device characteristic and each user characteristic to produce the modified training dataset.

The method may further comprise a step of training the machine-learning algorithm using the modified training dataset.

The step of training the machine-learning algorithm may comprise iteratively performing steps of: processing each training input image using the machine-learning algorithm to produce, for each training input image, predicted output data; using a loss function to determine an error between the predicted output data and the training output data; and modifying the machine-learning algorithm responsive to the determined error. Suitable loss functions and other approaches for determining an error are well known in the art.

There is also proposed a computer-implemented method of performing a desired task on an input image produced by a camera of a personal care device, the computer-implemented method comprising: obtaining the input image; and processing the input image using a machine-learning algorithm trained using any herein described method to thereby perform the desired task on the input image.

There is also provided a training dataset obtainable by performing a herein described method for modifying a training dataset usable for training a machine-learning algorithm to perform a desired task on an input image produced by a camera of a personal care device.

There is also proposed a non-transitory storage medium that stores the training dataset obtainable by performing a herein described method for modifying a training dataset usable for training a machine-learning algorithm to perform a desired task on an input image produced by a camera of a personal care device.

Preferably, any herein described method is performed by a processing system that is separate to the personal care device, such as a cloud-computing processing system.

There is also proposed a computer program product comprising computer program code means which, when executed by a processing system, cause the processing system to perform all of the steps of any herein described method.

There is also proposed a processing system for modifying a training dataset usable for training a machine-learning algorithm to perform a desired task on an input image produced by a camera of a personal care device, the processing system being configured to: obtain, for each of one or more device characteristics of the personal care device, a value of the device characteristic; obtain the training dataset for the machine-learning algorithm, the training dataset comprising a plurality of training data entries, each training data entry comprising a training input image and training output data representing the data produced by performing the desired task on the training input image; and modify each training input image using the value of each device characteristic to produce a modified training dataset.

The value of each device characteristic may be generated by one or more sensors of the personal care device.

Preferably, at least one of the one or more device characteristics is responsive to or indicative of a motion of the personal care device during use.

In some examples, at least one of the one or more device characteristics is a characteristic of the camera of the personal care device.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a method according to an embodiment;
Fig. 2 illustrates a wobble effect in an input image; and
Fig. 3 illustrates a processing system according to an embodiment.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for modifying a training dataset that can be used to train a machine-learning algorithm. The trained machine-learning algorithm is for performing a desired task on an input image generated by a camera of a personal care device. Training input images, of a training dataset for the machine-learning algorithm, are modified responsive to one or more values of one or more device characteristics of the personal care device.

The present disclosure relates to a procedure for modifying or adjusting a training dataset for training a machine-learning algorithm, specifically a machine-learning algorithm that is configured to perform a desired task on an input image provided by a camera of a personal care device.

The skilled person would readily appreciate that a wide variety of different desired tasks for processing an input image would be apparent to the skilled person.

The desired task is preferably an image (i.e., a digital image) enhancement and/or analysis technique or task, i.e., one that includes the performance of digital enhancement or analysis of the input image. Example tasks may include denoising, objection detection, image classification, image segmentation, image quality estimation and so on.

The present disclosure provides an approach for improving the performance of such a machine-learning algorithm in the specific use-case scenario of a personal care device. The nature and usage of a personal care device means that there are particular difficulties in providing a generic machine-learning algorithm to process images captured by a camera of such a personal care device. The present invention provides an approach for overcoming this issue.

It is well known that a machine-learning algorithm is any self-training algorithm that processes input data in order to produce or predict output data. Here, the input data comprises an input image provided by a camera of a personal care device and the output data comprises the outcome of a desired task performed on the input image.

Example output data may, for instance, include a denoised input image, a classification of the input image, identification of the location of a representation of a desired object within the input image, a segmentation result of the input image. Other examples will be apparent to the skilled person, and the present invention is not limited to the specific image enhancement, analysis or other image processing technique performed by the desired task.

Suitable machine-learning algorithms for being employed in the present invention will be apparent to the skilled person. Examples of suitable machine-learning algorithms include decision tree algorithms and artificial neural networks. Other machine-learning algorithms such as logistic regression, support vector machines or Naive Bayesian models are suitable alternatives.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

Methods of training a machine-learning algorithm are well known. Typically, such methods comprise obtaining a training dataset, comprising training data entries. Each training data entry comprises a training input data entry and a training output data entry. An initialized machine-learning algorithm is applied to each training input data entry to generate predicted output data entries. An error between the predicted output data entries and corresponding training output data entries is used to modify the machine-learning algorithm. Typically, this error is determined using a loss function, sometimes called a cost function. This process can be repeated until the error converges, and the predicted output data entries are sufficiently similar (e.g. ±1%) to the training output data entries. This is commonly known as a supervised learning technique.

For example, where the machine-learning algorithm is formed from a neural network, (weightings of) the mathematical operation of each neuron may be modified until the error converges. Known methods of modifying a neural network include gradient descent, backpropagation algorithms and so on.

The training input data entries correspond to example input images (i.e., comprise training input images). Thus, each training input data entry is a training input image. The training output data entries correspond to example outcomes of a desired task performed on an input image. Thus, each training output data entry is training output data.

As previously mentioned, the present invention relates to the improvement of a training dataset usable for training a machine-learning algorithm for processing an input image provided by a personal care device. This, in turn, leads to an improved machine-learning algorithm.

It has been recognized that, in current practice, the training dataset used to train a machine-learning algorithm is produced in a controlled environment (such as a clinical setting) and/or using professional imaging equipment and/or by a trained/skilled operator. As such, the images contained in the training dataset are not representative of the images that would actually be obtained by a personal care device.

By way of example, a motion of the personal care, or an element thereof, during use is likely to cause image distortion/blurring, which causes of motion are not present in a controlled environment. The motion may, for instance, result from a vibrating or rotating motion of the personal care device or an element thereof. It would be readily appreciated that a wide variety of different personal care devices are likely to have a moving element, e.g., power toothbrushes, mouthpieces, shavers, hair trimmers, breast pumps (resulting from at least the pulsed motion caused by suction-backpressure) and/or oral irrigators.

As another example, the properties of the camera of the personal care device are unlikely to be the same as the camera used to capture the images in the training dataset. This would result in different types/structure of image being produced by the camera of the personal care device compared to the images in the training dataset.

As another example, some personal care devices may introduce or provide additional light sources that are not present when generating the training dataset. For instance, an Intense Pulsed Light (IPL) hair removal device will generate flashes of light, which can affect an exposure of any images captured by a personal care device.

A simple approach to resolving this issue is, of course, to use a training dataset that includes, as its input data entries, images captured by the camera of a personal care device that have been appropriately processed to perform the desired task (e.g., classified or denoised). However, this approach would create a significant burden in creating the necessary output data entries for performing accurate training. For instance, if the desired task to be performed by the machine-leaning algorithm is a classification task, then an expert would require a significant amount of time to review and label images produced by each individual personal care device in order to produce a good machine-learning algorithm for that personal care device.

The present disclosure proposes an alternative approach to overcoming the above-mentioned problem. In particular, the present disclosure proposes an approach for modifying or adjusting an existing training dataset to reflect the specific characteristics of the personal care device.

In particular, is has been recognized that the exact degree of blurring/distortion (or other characteristics) to any images captured by a camera of the personal care device depends upon personal device-specific parameters, including characteristics of the device per se and/or the user of the device.

The present disclosure proposes a method to apply device-specific augmentation to the images in the training dataset, which (when used to train a machine-learning algorithm) results in a machine-learning algorithm that is robust to the specific image properties (e.g., resulting from a particular blurring and/or distortion) resulting from use of the particular personal care device.

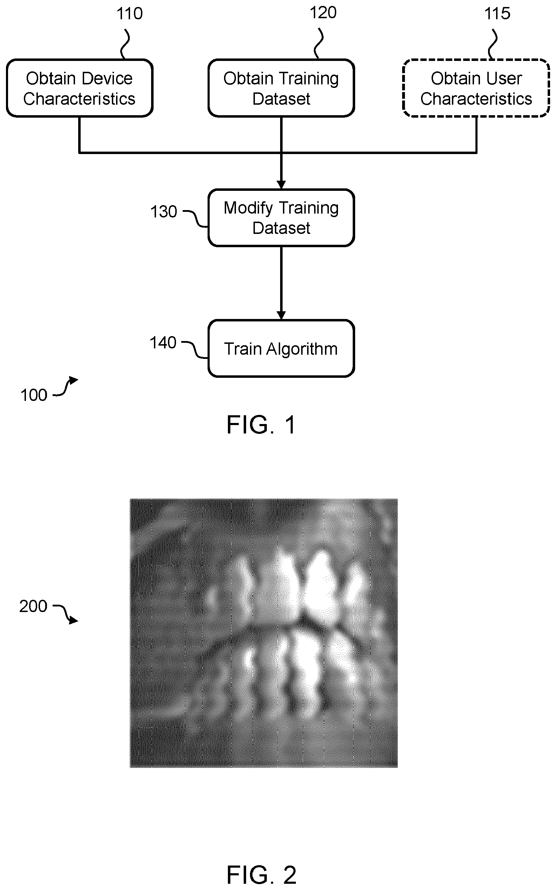

Fig. 1 is a flow-chart illustrating an approach or process 100 taken by embodiments of the invention. The process 100 is for modifying a training dataset usable for training a machine-learning algorithm to perform a desired task on an input image produced by a camera of a personal care device.

The process 100 comprises a step 110 of obtaining, for each of one or more device characteristics of the personal care device, a value of the device characteristic. Each device characteristic is preferably a characteristic that, if changed, would affect the distortion and/or blurring (or other image characteristic) of any image captured by the camera of the personal care device. More detailed examples are given later in the disclosure.

The value(s) of the device characteristic(s) may be obtained, for instance, from the personal care device itself. Preferably, one or more sensors of the personal care device are configured to generate at least one of the value(s). In some examples at least one of the value(s) are stored by a memory of the personal care device. In some embodiment, at least one of the values is/are stored by another memory (e.g., a cloud-computing based memory system).

The process 100 also comprises a step 120 of obtaining a training dataset for the machine-learning algorithm. The training dataset comprising a plurality of training data entries, each training data entry comprising a training input image and training output data representing the data produced by performing the desired task on the training input image.

The training dataset may be obtained, in step 120, from a database or other form of memory that stores the training dataset. This may, for instance, be a cloud-computing based database or memory.

The process 100 also comprises a step 130 of modifying each training input image using the value of each device characteristic to produce a modified training dataset. Thus, the training input image of each training data entry is modified using the value of each device characteristic. The training output data for the training data entry remains unmodified. This produces a new training dataset with modified data. In particular, the new training dataset is personalized or made bespoke to the specific personal care device.

Step 130 is therefore effectively a step of augmenting the training dataset using characteristics of the personal care device. This attunes the training dataset to the specific intrinsic properties or use of the personal care device.

Step 130 may, for instance, comprise processing the value(s) of the device characteristic(s) to determine or predict an effect of said value(s) on the images produced by a camera of the personal care device. Step 130 may then perform a process of modifying each training input image to simulate or emulate this same effect in each training input image.

It will be appreciated that different values for the device characteristics will influence the images generated by the camera of the personal care device to a different extent. The training input images can thereby be adapted to simulate or emulate a similar influence.

The process 100 may also comprise a step 140 of training the machine-learning algorithm using the modified training dataset. Approaches for training a machine-learning algorithm using a training dataset are well established, and have been previously described.

By way of example, step 140 may comprise iteratively performing steps of: processing each training input image using the machine-learning algorithm to produce, for each training input image, predicted output data; using a loss function to determine an error between the predicted output data and the training output data; and modifying the machine-learning algorithm responsive to the determined error.

The iterations may be performed until the error converges, until more than a predetermined number of iterations have been performed and/or until the value of the error falls below some predetermined value. Other suitable criteria for terminating the iterations will be apparent to the skilled person.

Naturally, the modifications performed in step 130 will be at least partially dependent upon the device characteristic(s) for which a value or values are obtained in step 110.

Preferably, the value(s) of at least one of the device characteristic(s) is/are generated by one or more sensors of the personal care device. The use of one or more sensors provides device or use specific information for use in augmenting the training dataset, thereby providing a more accurate and use-specific machine-learning algorithm.

In preferred embodiments, at least one of the one or more device characteristics is responsive to or indicative of a motion of the personal care device during use. It has been recognized that such characteristics will significantly affect the blurring/distortion of any images captured by the camera of the personal care device. Examples of suitable sensors that can be used to capture such device characteristics include an inertial measurement unit (IMU), an accelerometer and/or a gyrometer.

A number of examples of how to modify input images of a training dataset using the value(s) of the device characteristic(s) are hereafter described. It will be appreciated that these provide a non-exhaustive range of examples that help set out how proposed approach can be used to improve the training dataset usable for training the machine-learning algorithm.

Any combination of one or more of the following example approaches could be used.

In a first example, the one or more device characteristics includes an image resolution for images captured by the camera of the personal care device. This information may, for instance, be stored in a memory or other storage unit of the personal care device. Alternatively, this information may be derived by direct analysis of an image captured by the camera of the personal care device. Alternatively, this information may be stored in an external database that can be consulted, for instance, using device identifying information of the personal care device (e.g., a device model identifier).

In this first example, step 130 of modifying the training input images in the training dataset may comprise adapting the image resolution of the training input images to match that of images captured by the camera of the personal care device. This may comprise, for instance, performing a subsampling process on each training input image (to reduce a resolution) or performing a super-resolution process on each training input image (to increase a resolution).

In a second example, the one or more device characteristics include a field-of-view of the camera of the personal care device. A field-of-view defines the amount of the world that is observable by the camera of the personal care device, e.g., definable by the angle of view and/or focal length etc. This information may, for instance, be stored in a memory or other storage unit of the personal care device. Alternatively, this information may be stored in an external database that can be consulted, for instance, using device identifying information of the personal care device (e.g., a device model identifier).

In this second example, step 130 of modifying the training input images in the training dataset may comprise adapting the field-of-view of each training input image to match that of any images captured by the camera of the personal care device. In particular, the field of view of each training input image may be known (e.g., from characteristics of the camera that captured the training input image(s)). The field of view can then be modified, e.g., the training input image can be appropriately cropped and/or blurred, to match the (expected) field-of-view of images captured by the camera of the personal care device.

In a third example, the camera for the personal care device uses a rolling shutter technique to capture images. In this scenario, it is appreciated that a motion of the personal care device (e.g., due to a vibrating element of the personal care device, such as a toothbrush) will result in a "wobble" effect appearing in the captured images, as the position of the camera may change slightly between different line captures (causing a perceived pixel shift between neighboring lines or rows of a captured image).

This effect is illustrated in Fig. 2, which demonstrates the blurring/distortion in an intra-oral image 200 recorded with a vibrating oral care device (e.g., a power toothbrush). The wobble effect can be clearly seen as the apparent wavy lines that are oriented in a vertical direction. This is a result of different amount of horizontal pixel shifting (resulting from vibrations) between the capture of different lines of the intra-oral image.

In this third example, the one or more device characteristics may include: an indicator of whether or not the camera uses a rolling shutter technique; a time-delay between exposure of neighboring image lines; a vibration frequency of the vibrating element and a vibration amplitude of the vibrating element.

The vibration frequency and/or amplitude can be determined using, for instance, a vibration sensor (such as an accelerometer) carried by the personal care device. A vibration sensor is any sensor that generates a signal responsive to an amount of vibration, and is designed for determining an amount of vibration. As another example, this information may be stored in a memory or other storage unit of the personal care device or an external memory device (e.g., retrievable using device identifying information of the personal care device (e.g., a device model identifier)).

The absolute vibration amplitude (e.g., in real space) can be used, alongside information about the camera, to derive a corresponding maximum pixel shift within images captured by the camera. For instance, a relationship between absolute vibration amplitude and a pixel size can be used to predict or determine a maximum possible pixel shift of an image as a result of a vibration.

Values of these device characteristics can be used to simulate the same "wobble" effect in training input images. In particular, the time-delay and vibration frequency can be used to predict a pixel shifting, e.g., as a percentage of a maximum possible pixel shift, between neighboring lines/rows. The vibration amplitude can be used to predict the maximum pixel shift for a line/row of image data. In particular, if the time-delay and vibration frequency are known, it is possible to identify which lines of the training input image should be shifted to simulate the wobble effect and to what extent each line should be shifted (e.g., up to a maximum pixel shift).

Thus, in this third example, step 130 of modifying the training input images in the training dataset may comprise simulating a wobble effect caused by the personal care device.

In a fourth example, the camera for the personal care device uses a global shutter technique to capture images. In this scenario, it is appreciated that a motion of the personal care device (e.g., due to a vibrating element of the personal care device, such as a toothbrush) can cause a motion blur in the images captured by the camera of the personal care device.

In this fourth example, the one or more device characteristics may include at least vibration amplitude of the personal care device. The vibration amplitude can be used to simulate a motion blur in the training input images in step 130.

The vibration amplitude can be determined using, for instance, a vibration sensor (such as an accelerometer) carried by the personal care device. As another example, this information may be stored in a memory or other storage unit of the personal care device or an external memory device (e.g., retrievable using device identifying information of the personal care device (e.g., a device model identifier)).

In a more advanced embodiment of the fourth example, the one or more device characteristics may further include a duty cycle of image acquisition and a vibration frequency. This can be used to predict a total amount of vibration that occurs to affect the motion blur in images captured by the camera of the personal care device, which can be simulated in step 130.

This information may be stored in a memory or other storage unit of the personal care device or an external memory device (e.g., retrievable using device identifying information of the personal care device (e.g., a device model identifier)). In some examples, the vibration frequency and/or amplitude can be determined using a vibration sensor carried by the personal care device.

In a fifth example, the one or more device characteristics may include one or more illumination characteristics of the camera of the personal care device. Different illumination characteristics will generate images having different illumination properties (e.g., different brightnesses, contrasts, type of color/wavelength and so on). The illumination may, for instance, be caused by the nature of the camera itself or by another light source, e.g., a light source carried by the personal care device such as a laser for performing IPL.

This information can be used to define or modify illumination or lighting characteristics of the training input images. For instance, a brightness, color and/or contrast of each training input image can be modified responsive to the values of the illumination characteristics.

More particularly, illumination characteristics can be used to define or predict an expected (average) brightness, contrast and/or color of images captured by the camera of the personal care device. This information can be used to modify the corresponding properties of the training input image(s). This more closely aligns the illumination properties of the training input image(s) with those of the camera of the personal care device.

This information may be stored in a memory or other storage unit of the personal care device or an external memory device (e.g., retrievable using device identifying information of the personal care device (e.g., a device model identifier)).

In a sixth example, the camera for the personal care device uses a rolling shutter technique to capture images. In this scenario, it is appreciated that a pulsing light emitted by a light source carried by the personal care device will result in different illumination characteristics for different line captures.

In this sixth example, the one or more device characteristics may include: an indicator of whether or not the camera uses a rolling shutter technique; a time-delay between exposure of neighboring image lines; a pulse intensity, pulse frequency and/or pulse duration of a flash of a light source carried by the personal care device.

This information can be used to predict, for each line capture of an image generated by the camera of the personal care device, an expected brightness, color and/or contrast (or any other lighting characteristic). This information can in turn be used to appropriately modify the corresponding lines of each training input image to match the expected brightness, color and/or contrast (e.g., if the camera uses a rolling shutter technique).

Any combination of the above-identified examples can be used to modify the training input images.

The above-described examples provide a range of various approaches for modifying training input images using different examples of device characteristics.

The skilled person would readily appreciate other approaches for modifying training input images based on device characteristics of the personal care device, such that the characteristics of the training input images closely match or align with those of the images captured by the camera of the personal care device.

Suitable example device characteristics include: a vibration frequency of the personal care device and/or a vibrating element of the personal care device during use; a vibration amplitude of the personal care device and/or a vibrating element of the personal care device during use; and/or a rotation frequency of a rotating element of the personal care device during use.

Other suitable example device characteristics include: a vibration waveform or pattern of the personal care device and/or a vibrating element of the personal care device during use; and/or a rotation waveform or pattern of a rotating element of the personal care device during use.

Knowing the exact vibration or rotation waveform would allow for a more accurate identification of the effect of the vibration/rotating on images generated by a camera of the personal care device. This can allow, for instance, for more accurate modification to the training input images to simulate this same effect.

Yet other suitable device characteristics include a frame rate of the camera; an indicator of whether or not the camera uses a global shutter technique; an indicator of whether or not the camera uses a rolling shutter technique; if the camera uses a rolling shutter technique, a line collection time and/or a time-delay between exposure of neighboring image lines; if the camera uses a global shutter technique, a duty cycle of image acquisition; and/or one or more illumination parameters of the camera.

In some embodiments, step 120 may be adapted to comprise obtaining the training dataset responsive to the value(s) of the one or more device characteristics.

In particular, step 120 may comprise selecting a subset of training data entries from a larger pool of training data entries to form the training dataset. The subset will not comprise the entire pool of training data entries. The training data entries in the subset may be chosen, for instance, to contain training input images that resemble or having similar characteristics to images that will be produced by the personal care device in use.

By way of example, each training data entry in the pool of training data entries may be associated with a value for each of one or more potential device characteristics. Step 120 may comprise selecting those matching or corresponding to the value(s) of the device characteristic(s) obtained in step 110.

Purely by way of working example, each training data entry may comprise an indicator of whether the training input image (of that training data entry) was obtained using a rolling shutter technique or a global shutter technique. The device characteristic(s) of the personal care device may include an indicator as to whether the camera of the personal care device uses a rolling shutter or global shutter technique to capture images. The selection of training data entries for the subset may comprise selecting (only) those that were captured using the same shutter technique as the camera of the personal care device.

As another example, each training data entry may comprise an indicator of a field of view of the training input image. The device characteristic(s) of the personal care device may include information on a field of view of the camera of the personal care device. The selection of training data entries for the subset may comprise selecting (only) those that are within a predetermined range of the field of view (e.g., ±10%).

The process 100 may further comprise a step 115 of obtaining, for each of one or more user characteristics of a user of the personal care device, a value of the user characteristic. The step 130 of modifying each training input image comprises modifying each training input image using the value of each device characteristic and each user characteristic to produce the modified training dataset.

Example user characteristics may include, for example, a motion pattern of the personal care device for a user of the personal care device. The motion pattern may, for instance, represent a movement of the personal care device by the user that influence the images taken by the camera of the personal care device. The modification to the training input image(s) of the training dataset may, for instance, comprise simulating the effect of such a movement (e.g., motion blur or the like).

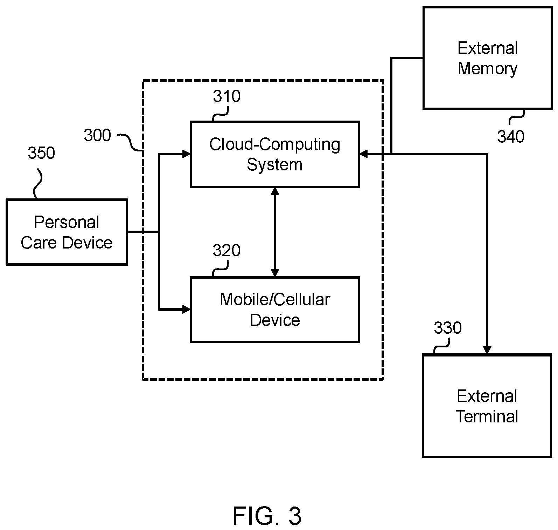

Fig. 3 illustrates a processing system 300 configured to perform the method 100, previously described.

The processing system 300 is separate to the personal care device, e.g., is not physically connected to the personal care device 350. The processing system may, for instance, comprise a cloud computing system 310 and/or a mobile/cellular device 320 (such as a mobile/cellular telephone, smartphone, laptop or tablet).

The processing system 300 is configured to obtain, for each of one or more device characteristics of the personal care device, a value of the device characteristic.

The processing system may obtain at least some of the value(s) from the personal care device. Thus, the processing system 300 may be configured to communicate with the personal care device (e.g., over a wireless communication channel) to retrieve or receive the value(s) of the device characteristic(s) .

The processing system 300 is also configured to obtain a training dataset for the machine-learning algorithm. The training dataset may, for instance, be stored by a separate memory 340 or storage system (e.g., a cloud-computing storage system). As previously explained, the training dataset comprising a plurality of training data entries, each training data entry comprising a training input image and training output data representing the data produced by performing the desired task on the training input image.

The processing system 300 is configured to modify each training input image using the value of each device characteristic to produce a modified training dataset. The processing system may also train the machine-learning algorithm using the modified training dataset.

In a first embodiment, the processing system 300 comprises the cloud computing device 310 and the mobile/cellular device 320. The mobile/cellular device is configured to receive the value(s) of the device characteristic(s), e.g., from the personal care device 350. The mobile/cellular device then passes the received values onto the cloud-computing system to perform the remaining steps of the method.

In a second embodiment, the processing system 300 comprises only the cloud computing device 310. The cloud-computing device may be configured to directly receive the value(s) of the device characteristic(s), e.g., from the personal care device 350, before performing the remaining steps of the method.

Alternative approaches for receiving/obtaining at least one of the values (rather than from the personal care device) are also envisaged. For instance, at least one of the values may be stored by another memory 340 (e.g., a cloud-computing based memory system). It may be possible to retrieve the value(s) using a device identifier of the personal care device (e.g., a model and/or make of the personal care device).

It will be appreciated that there is also proposed a computer-implemented method of performing a desired task on an input image produced by a camera of a personal care device.

The computer-implemented method comprises: obtaining the input image; and processing the input image using a machine-learning algorithm trained using a previously described method (i.e., trained using the modified training dataset produced by a described embodiment) to thereby perform the desired task on the input image.

Referring to Fig. 3, this computer-implemented method may be performed by the processing system 300. In particular, this computer-implemented method may be performed by the mobile device 320 and/or the cloud-computing system 310. Thus, the mobile device 320 and/or the cloud-computing system may host the trained machine-learning algorithm (regardless of where said algorithm is trained).

In one example, the machine-learning algorithm is trained by the cloud-computing system 310 and deployed to the mobile/cellular device 320. The mobile/cellular device may then obtain the input image and process said input image using the machine-leaning algorithm to perform the desired task.

In another example, the machine-learning algorithm is trained by the cloud-computing device and deployed at the cloud-computing system 310. The input image may be passed to the cloud-computing system (optionally via the mobile/cellular device 320) and processed by the cloud-computing system to perform the desired task.

The outcome of the desired task is some output data, e.g., a classification or the like. If generated by the cloud-computing system, the output data may be provided to the mobile/cellular device 320 (e.g., for display) or another electronic device, such as terminal 330 (e.g., laptop/computer) for a healthcare professional or a storage/memory system, such as the separate memory 340.

There is also provided a training dataset produced or obtainable by performing any previously described method for modifying a training dataset usable for training a machine-learning algorithm to perform a desired task on an input image produced by a camera of a personal care device. Similarly, there is also provided a machine-learning algorithm trained using such a training dataset.

The training dataset and/or machine-learning algorithm may be stored on a storage medium, and preferably a non-transitory storage medium. Thus, there is provided a non-transitory storage medium storing the training dataset and/or the machine-learning algorithm.

The skilled person would be readily capable of developing a processing system for carrying out any herein described method. Thus, each step of a flow chart may represent a different action performed by a processing system, and may be performed by a respective module of the processing system.

The processing system can be implemented in numerous ways, with software and/or hardware, to perform the various functions required. The processing system typically employs one or more microprocessing systems that may be programmed using software (e.g., microcode) to perform the required functions. The processing system may be implemented as a combination of dedicated hardware to perform some functions and one or more programmed microprocessing systems and associated circuitry to perform other functions.

Examples of circuitry that may be employed in various embodiments of the present disclosure include, but are not limited to, conventional microprocessing systems, application specific integrated circuits (ASICs), and field-programmable gate arrays (FPGAs).

In various implementations, the processing system may be associated with one or more storage media such as volatile and non-volatile computer memory such as RAM, PROM, EPROM, and EEPROM. The storage media may be encoded with one or more programs that, when executed on one or more processing systems and/or controllers, perform the required functions. Various storage media may be fixed within a processing system or controller or may be transportable, such that the one or more programs stored thereon can be loaded into a processing system.

There is also proposed a computer program product comprising computer program code means which, when executed by a processing system, cause the processing system to perform all of the steps of any herein disclosed method. A computer program may be stored/distributed on any suitable non-transitory medium, such as an optical storage medium or a solid-state medium supplied together with or as part of other hardware, but may also be distributed in other forms, such as via the Internet or other wired or wireless telecommunication systems.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processing system may be implemented by a single processing system or by multiple separate processing units which may together be considered to constitute a "processing system". Such processing units may in some cases be remote from each other and communicate with each other in a wired or wireless manner.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A computer-implemented method for modifying a training dataset usable for training a machine-learning algorithm to perform a desired task on an input image produced by a camera of a personal care device, the computer-implemented method comprising:
obtaining, for each of one or more device characteristics of the personal care device, a value of the device characteristic;
obtaining the training dataset for the machine-learning algorithm, the training dataset comprising a plurality of training data entries, each training data entry comprising a training input image and training output data representing the data produced by performing the desired task on the training input image; and
modifying each training input image using the value of each device characteristic to produce a modified training dataset.

2. The computer-implemented method of claim 1, wherein the value of at least one device characteristic is generated by one or more sensors of the personal care device.

3. The computer-implemented method of any of claims 1 to 2, wherein at least one of the one or more device characteristics is responsive to or indicative of a motion of the personal care device during use.

4. The computer-implemented method of claim 3, wherein the one or more device characteristics comprises one or more of the following:
a vibration frequency of the personal care device and/or a vibrating element of the personal care device during use;
a vibration amplitude of the personal care device and/or a vibrating element of the personal care device during use;
a vibration waveform or pattern of the personal care device and/or a vibrating element of the personal care device during use;
a rotation frequency of a rotating element of the personal care device during use; and/or
a rotation waveform or pattern of a rotating element of the personal care device during use.

5. The computer-implemented method of any of claims 1 to 4, wherein at least one of the one or more device characteristics is a characteristic of the camera of the personal care device.

6. The computer-implemented method of claim 5, wherein the one or more device characteristics comprises one or more of the following:
a frame rate of the camera or any other imaging sensor;
an indicator of whether or not the camera uses a global shutter technique;
an indicator of whether or not the camera uses a rolling shutter technique;
if the camera uses a rolling shutter technique, a line collection time and/or a time-delay between exposure of neighboring image lines;
if the camera uses a global shutter technique, a duty cycle of image acquisition; and/or
one or more illumination parameters of the camera.

7. The computer-implemented method of any of claims 1 to 6, further comprising a step of obtaining, for each of one or more user characteristics of a user of the personal care device, a value of the user characteristic,
wherein the step of modifying each training input image comprises modifying each training input image using the value of each device characteristic and each user characteristic to produce the modified training dataset.

8. The computer-implemented method of any of claims 1 to 7, further comprising training the machine-learning algorithm using the modified training dataset.

9. A computer-implemented method of performing a desired task on an input image produced by a camera of a personal care device, the computer-implemented method comprising:
obtaining the input image; and
processing the input image using a machine-learning algorithm trained using the method of claim 8 to thereby perform the desired task on the input image.

10. A training dataset obtainable by performing the method of any of claims 1 to 7.

11. The computer-implemented method of any of claims 1 to 10, wherein the method is performed by a processing system that is separate to the personal care device, such as a cloud-computing processing system.

12. A computer program product comprising computer program code means which, when executed by a processing system, cause the processing system to perform all of the steps of the method according to any of claims 1 to 11.

13. A processing system for modifying a training dataset usable for training a machine-learning algorithm to perform a desired task on an input image produced by a camera of a personal care device, the processing system comprising:
obtain, for each of one or more device characteristics of the personal care device, a value of the device characteristic;
obtain the training dataset for the machine-learning algorithm, the training dataset comprising a plurality of training data entries, each training data entry comprising a training input image and training output data representing the data produced by performing the desired task on the training input image; and
modify each training input image using the value of each device characteristic to produce a modified training dataset.

14. The processing system of claim 13, wherein the value of each device characteristic is generated by one or more sensors of the personal care device.

15. The processing system of claim 13 or 14, wherein at least one of the one or more device characteristics is: responsive to or indicative of a motion of the personal care device during use; and/or a characteristic of the camera of the personal care device.
